# EUROPÄISCHE PATENTANMELDUNG

(11) **EP 2 859 979 A1**
(43) Veröffentlichungstag der Anmeldung: **15.04.2015**
(21) Anmeldenummer: 13187753.2
(22) Anmeldetag: 08.10.2013
(51) Int. Cl.: B23K 1/00, B23K 35/30, B23P 6/00, B23P 15/02, B23K 26/34, C23C 4/08, C23C 4/12, F01D 5/00

(54) **Reparatur von Flächen mittels eines Lot/Grundwerkstoffgemischs und Bauteil**

(71) Anmelder: Siemens Aktiengesellschaft, 80333 München (DE)
(72) Erfinder: Arjakine, Nikolai, 10555 Berlin (DE); Burbaum, Bernd, 14612 Falkensee (DE); Jokisch, Torsten, 15366 Neuenhagen bei Berlin (DE); Laux, Britta, 14059 Berlin (DE); Lorenz, Stephan, 14612 Falkensee (DE); Piegert, Sebastian, 10777 Berlin (DE); Reinkensmeier, Ingo, 58730 Fröndenberg (DE)

(57) **Zusammenfassung**

Durch die Verwendung von hohen Chrom- und Aluminiumanteilen im Spritzgut wird auch die Oxidationsbeständigkeit beim Materialauftrag erhöht.

## Beschreibung

Die Erfindung betrifft ein Verfahren zur Reparatur oder Materialauftrag auf eine größere Fläche, bei dem ein Lot/Grundwerkstoffgemisch verwendet wird und Bauteil.

Materialauftrag kann auf verschiedene Art und Weise erfolgen, wie durch Auftragsschweißen, thermische Spritzverfahren oder Auftragslöten mittels verschiedener Applikationstechniken.

Bei Turbinenschaufeln sind dies einsatzbedingte Abnutzungserscheinungen, die zu einem Abtrag von Material führen.

Bisher wurde versucht, den Materialauftrag durch Auftragsschweißen zu reparieren, was bei nickelbasierten Superlegierungen mit erheblichem Aufwand verbunden ist.

Es ist daher Aufgabe der Erfindung ein Verfahren vorzuschlagen, mit dem oben genanntes Problem gelöst und ein einfacheres Verfahren vorgeschlagen wird.

Die Aufgabe wird gelöst durch ein Verfahren gemäß Anspruch 1 und ein Bauteil gemäß Anspruch 10.

In den Unteransprüchen sind weitere vorteilhafte Maßnahmen aufgelistet, die beliebig miteinander kombiniert werden können, um weitere Vorteile zu erzielen.

Durch das Verfahren und das Bauteil wird kostengünstig repariert.

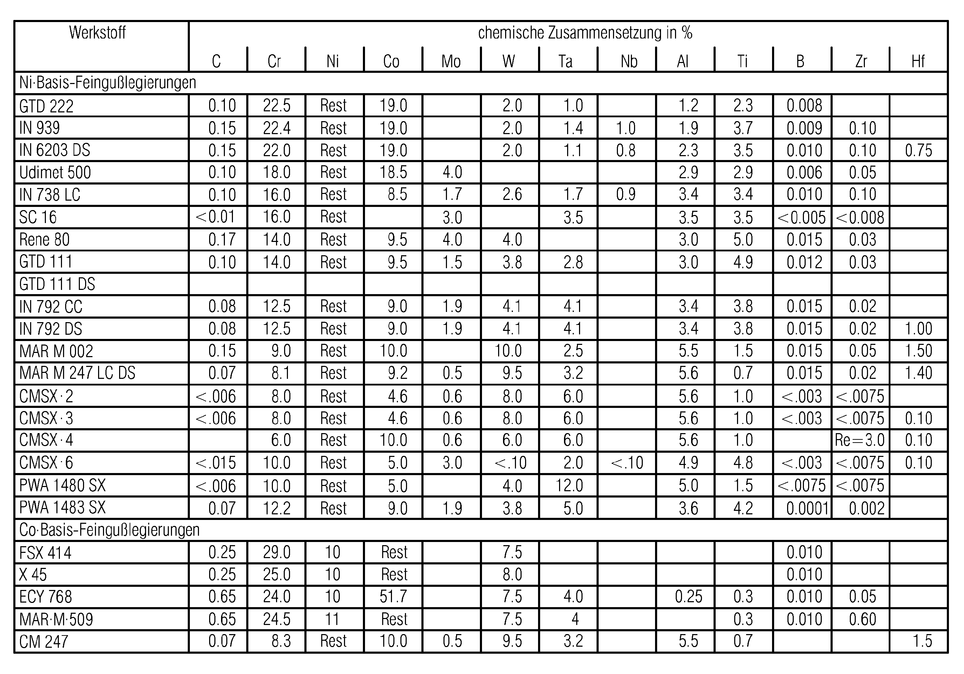

Die Figur zeigt eine Liste von Superlegierungen.

Die Beschreibung und die Figur stellt nur ein Ausführungsbeispiel der Erfindung dar.

Der Materialauftrag eines Lot/Grundwerkstoffgemischs erfolgt durch ein thermisches Spritzverfahren, insbesondere wird dabei das Hochgeschwindigkeitsflammspritzen (HVOF) wie auch APS, VPS oder Kaltgasspritzen verwendet.

Die Oberfläche eines Substrats, auf die aufgetragen wird, wurde vorher von Verunreinigungen und/oder Oxiden gereinigt oder ggf. entsprechend ausgemuldet.

Dabei weist das so vorbereitete Substrat vorzugsweise eine nickel- oder kobaltbasierte Legierung auf, insbesondere eine Legierung gemäß der Figur.

Als Ausgangsmaterial für das thermische Spritzen wird ein Gemisch von Grundwerkstoff des Substrats und einem Lot verwendet, wobei der Chromanteil (Cr) des Lots bei ≥ 10 Gew-% liegt und/oder der Aluminiumanteil (Al) bei ≥ 5 Gew-% liegt. Das Mischungsverhältnis kann zwischen 90% und 10%, insbesondere zwischen 80% und 20% liegen.

Das Lot hat einen um mindestens 10K, insbesondere um 20K niedrigeren Schmelzpunkt als den Grundwerkstoff.

Das Lot stellt vorzugsweise eine nickel- oder kobaltbasierte Legierung dar mit zumindest den weiteren Elementen Aluminium (Al) sowie optional Kobalt (Co), Nickel (Ni), Chrom (Cr), Wolfram (W), Titan (Ti) und/oder Tantal (Ta).

Durch die Verwendung der hohen Chrom- und Aluminiumanteile wird auch die Oxidationsbeständigkeit deutlich erhöht.

In einem standardmäßigen Wiederaufarbeitungsprozess (Refurbishment) des eingesetzten Bauteils erfolgt auch eine Wärmebehandlung des Grundwerkstoffs, wobei hier die Auswahl des Lots und/oder des Lotanteils so gewählt wird, dass durch diese Wärmebehandlung ein Lötprozess erfolgt und sich eine optimale Mikrostruktur im Bereich der Reparaturstelle und dem Substrat aus dem Grundwerkstoff einstellt.

Die Erfindung kombiniert die Reparatur mit der Applikation eines verbesserten Oxidationsschutzes. Danach können wieder metallische Schutzschichten, insbesondere aus MCrAlY und/oder keramische Schutzschichten, aufgebracht werden.

## Patentansprüche

1. Verfahren
zur Reparatur eines Materialabtrags oder zur Erhöhung der Wanddicke eines Substrats aus einem Grundwerkstoff,
bei dem durch ein thermisches Spritzverfahren ein Gemisch aus Grundwerkstoff und Lot aufgetragen wird.

2. Verfahren nach Anspruch 1,
bei dem das Lot einen Chromanteil (Cr) von ≥ 10 Gew-% aufweist.

3. Verfahren nach einem oder beiden der Ansprüche 1 oder 2, bei dem das Lot einen Aluminiumanteil (Al) von ≥ 5 Gew-% aufweist.

4. Verfahren nach einem oder mehreren der vorherigen Ansprüche 1, 2 oder 3,
bei dem das Substrat ein nickel- oder kobaltbasiertes Substrat darstellt.

5. Verfahren nach einem oder mehreren der vorherigen Ansprüche 1, 2, 3 oder 4,
bei dem das Lot eine nickel- oder kobaltbasierte Legierung darstellt.

6. Verfahren nach einem oder mehreren der vorherigen Ansprüche 1, 2, 3, 4 oder 5,
bei dem das Mischungsverhältnis von Grundwerkstoff und Lot zwischen 90% und 10%,
insbesondere zwischen 80% und 20% beträgt.

7. Verfahren nach einem oder mehreren der vorherigen Ansprüche 1, 2, 3, 4, 5 oder 6,
bei dem die Löttemperatur für das Lot-Grundwerkstoffgemisch der Temperatur einer Wärmebehandlung des Substrats aus dem Grundwerkstoff entspricht,
und eine Wärmebehandlung durchgeführt wird.

8. Verfahren nach einem oder mehreren der vorherigen Ansprüche 1, 2, 3, 4, 5, 6 oder 7,
bei dem als thermisches Spritzverfahren,
insbesondere ein Plasmaspritzverfahren oder ein HVOF-Verfahren verwendet wird.

9. Verfahren nach einem oder mehreren der vorherigen Ansprüche 1, 2, 3, 4, 5, 6, 7 oder 8,
bei dem das Lot Chrom (Cr) und/oder Kobalt (Co), und/oder Tantal (Ta) und/oder Titan (Ti) und/oder Wolfram (W) und/oder Nickel (Ni) enthält.

10. Bauteil mit einem Substrat aus einem Grundwerkstoff, auf dem eine Schicht aus einem Lot-Grundwerkstof-Gemisch aufgespritzt ist,
insbesondere hergestellt nach einem oder mehreren der Ansprüche 1 bis 9,
wobei das Lot einen Chromanteil (Cr) von ≥ 10 Gew-% und/oder einen Aluminiumanteil (Al) von ≥ 5 Gew-% aufweist.

11. Bauteil nach Anspruch 10,
bei dem über die Schicht aus dem Lotgrundwerkstoff metallische und/oder keramische Schutzschichten,
insbesondere MCrAlX und/oder
eine keramische Schicht aufgebracht sind.

12. Bauteil nach einem oder beiden der Ansprüche 10 oder 11, bei dem das Substrat eine nickel- oder kobaltbasierte Legierung darstellt.

13. Bauteil nach einem oder mehreren der Ansprüche 10 oder 11,
bei dem das Lot eine nickel- oder kobaltbasierte Legierung darstellt.
